(19) Europäisches Patentamt
European Patent Office
Office européen des brevets

(11) EP 0 679 685 B2

(12) NEW EUROPEAN PATENT SPECIFICATION

(45) Date of publication and mention of the opposition decision:
**23.04.2003 Bulletin 2003/17**

(45) Mention of the grant of the patent:
**16.09.1998 Bulletin 1998/38**

(21) Application number: **95106178.7**

(22) Date of filing: **25.04.1995**

(51) Int Cl.$^7$: **C08L 23/08**, C08L 23/06

# (54) Resin composition for extruded forms

Harzzusammensetzung für Strangpressformen

Composition de résine pour formes extrudées

(84) Designated Contracting States:
**DE FR GB IT**

(30) Priority: **25.04.1994 JP 8644194**
**01.06.1994 JP 12017794**

(43) Date of publication of application:
**02.11.1995 Bulletin 1995/44**

(73) Proprietor: **Mitsubishi Chemical Corporation**
**Chiyoda-ku, Tokyo (JP)**

(72) Inventors:
- **Shichijo, Keiko, c/o Mitsubishi Chem. Corp.**
  **Yokkaichi, Mie (JP)**
- **Yamamoto, Koji, c/o Mitsubishi Chem. Corp.**
  **Yokkaichi, Mie (JP)**
- **Ikeno, Hajime, c/o Mitsubishi Chem. Corp.**
  **Yokkaichi, Mie (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 333 508**
**EP-A- 0 359 440**
**EP-A- 0 600 482**
**WO-A-94/06857**

EP 0 679 685 B2

## Description

BACKGROUND OF THE INVENTION

FIELD OF THE INVENTION:

The present invention relates to a resin composition for extruded forms. More particularly, it relates to a resin composition for laminates which is free from unevenness of resin blending and excellent in transparency, low-temperature heat sealability, heat sealing strength, hot tack, strength, and balance in processing between drawability and neck-in and which is suitable for production of films; or, a resin composition which is free from unevenness of resin blending and excellent in transparency, heat sealing strength, strength, and workability and which is suitable for production of thin-gage forms selected from films or sheets.

BACKGROUND OF THE RELATED ART:

Conventionally, material for laminates has been high-pressure low-density polyethylene (hereinafter abbreviated as HPLDPE) obtained by polymerizing ethylene at high temperatures under high pressures by using a free-radical initiator. Although HPLDPE provides a film which is stable during forming and which has excellent high-speed processability, it is inferior in low-temperature heat sealability, heat sealing strength, and hot tack Therefore, ethylene-vinyl acetate copolymers (hereinafter abbreviated as EVA) have been used as a substitute for HPLDPE. While EVA has satisfactory low-temperature heat sealability, it cannot compensate for the other disadvantages of HPLDPE, i.e., poor heat sealing strength and poor hot tack.

In particular, as both HPLDPE and EVA are unsatisfactory with respect to hot tack, the formed film tends to suffer from peeling at the heat sealed portion when processed at high speed.

Ethylene-based resins conventionally used as materials for forming extrudates such as films or sheets include HPLDPE, EVA, and linear low-density polyethylene (hereinafter abbreviated as LLDPE).

However, films or sheets made of HPLDPE are inferior to those of other ethylene-based resins in transparency and low-temperature heat sealability. Further, films of EVA, with a high vinyl acetate content, are satisfactory in transparency and low-temperature heat sealability but inferior in heat sealing strength and tear resistance. Since LLDPE films or sheets have higher heat sealing strength and higher tear resistance than those made of HPLDPE or EVA, they have been used in various field as a substitute for HPLDPE or EVA. However, LLDPE exhibits poor properties in terms of transparency and low-temperature heat sealability and thus still cannot satisfy all the requirements demanded by the market.

Recently, U.S. Patent 5,206,075 proposed a multiple layer heat sealable film comprising a base layer and a heat sealable layer. According to the disclosure, it is essential to use, as a base layer polymer, a resin blend comprising (A) from about 1 to 30% by weight, based on the total base layer polymer, of a copolymer of ethylene and a $C_3$ to $C_{20}$ monoolefin comonomer prepared by using a metallocene catalyst system and (B) an olefin polymer, copolymer (A) having a density of from about 0.88 to 0.915 g/cm$^3$, a melt index of from about 0.5 to 7.5 g/10 min, a molecular weight distribution of not greater than about 3.5, and a composition distribution breadth index of greater than about 70%, and polymer (B) having a density exceeding 0.915 9/cm$^3$. However, this U.S. patent does not specifically mention as to the characteristics of resins to be used in combination or how to choose resins to be combined as a material for forming extruded forms, especially for films or sheets, or a resin composition for laminates. That is, the performance of this proposed resin composition is still insufficient.

EP-A-0 600 482 which represents prior art in the sense of Article 54(3) EPC, discloses as comparative examples (5 and 20) two resin compositions consisting of 60 wt.-% high pressure low density polyethylene and 40 wt.-% ethylene/l-hexene copolymer.

WO-A-94/06857 discloses a polymer composition comprising a blend of

(1) from 25 to 90% by weight of a very low density ethylene polymer having a density in the range of from 0,88 to 0,925 g/cm$^3$, a melt index of from 0,5 to 7,5 dg/min, and

(2) 10 to 75% by weight of a low to medium density ethylene polymer.

The above very low-density ethylene polymer (VLDPE) is specified as ethylene/$\alpha$-monoolefin copolymer wherein the monoolefin can have from 4 to 20 carbon atoms.

The above low to medium density ethylene polymer (2) may be prepared by conventional high-pressure polymerization. Preferred polymers are, according to WO-A-94/06857, low-density polyethylene as well as low-density copolymers of ethylene with up to 30 mol% of a comonomer such as propylene, vinyl acetate, acrylic acid and lower alkyl esters of acrylic acid. In the examples 1-4 component (1) represents from 30-70% of a butene-1/ethylene copolymer, whereas component (2) is formed by a high pressure low-density polyethylene. The examples 5 and 6 employ as component (1) a hexene-1/ethylene copolymer and as component (2) the same homopolymer as examples 1-4 in a ratio of (1)/(2) of 67/28.

US 4, 339,507 discloses an extrusion coating composition comprised of greater than 20 and less than 98 wt.-% of a high pressure low density polyethylene homopolymer and/or copolymer and greater than 2 and less than 80 wt.-% of at least one linear low density ethylene hydrocarbon copolymer.

D.G.F. Van der Sanden and R.W. Halle report in the "Tappi Journal, February 1992, page 99-103", of a new family of linear ethylene polymers obtainable by single-site Ziegler Natta catalysts.

The influence of long-chain branching on the viscoelastic properties of low density polyethylenes is the subject of an Article by L. Wild, R. Ranganath and D.C. Knobeloch in Polymer Engineering and Science, December 1976, Vol. 16, No. 12, pp. 811-816,

## SUMMARY OF THE INVENTION

An object of the present invention is to provide a resin composition for laminates which overcomes the disadvantages associated with the conventional techniques, that is, to produce a resin which exhibits improved low-temperature heat sealability, improved heat sealing strength and improved hot tack and, in addition, which exhibits excellent strength, satisfactory balance between drawability and neck-in in processing, is non-sticky with body (high rigidity), and freedom from unevenness of resin blending and is thereby capable of providing films which are easily handled and have good workability.

Another object of the present invention is to provide a resin composition for forming thin-gage forms which overcomes the disadvantages associated with the use of conventional ethylene-based resins as a material for forming extruded forms such as films or sheets, that is, which is free from unevenness of resin blending, excellent in transparency, heat seatability, and strength and capable of providing films or sheets with satisfactory workability.

As a result of extensive investigations, the present inventors have found that the above objects of the present invention can be accomplished by blending a specific ethylene resin and an ethylene-$\alpha$-olefin copolymer having specific properties, thereby achieving the present invention based on this finding.

The first and second embodiment of the present invention relates to a resin composition for laminates comprising:

Component (A): 60 to 85 % by weight of an ethylene resin selected from an ethylene-vinyl acetate copolymer and high-pressure low-density polyethylene and
Component (B): 15 to 40 % by weight of a copolymer of ethylene and an $\alpha$ -olefin having 6 to 10 carbon atoms,

said Component (B) having the following properties (a), (b), (c), and (d-1):

(a) a density (D) of 0.86 to 0.935 g/cm$^3$,
(b) an MFR of 1 to 50 g/10 min,
(c) an elution curve showing a single peak at a peak temperature of not higher than 100°C, said elution curve being obtained by TREF, in which substantial elution may occur at temperatures other than the peak temperature, and
(d-1) an integral elution volume of not less than 90% at an elution temperature of 90°C in TREF,

wherein component A is an ethylene-vinyl acetate copolymer having the following properties (a') to (d'):

(a') an MFR of 1 to 50 g/10 min,
(b') a vinyl acetate content of 3 to 30% by weight,
(c') a memory effect (ME) of 1.1 to 2.0, and
(d') a melt tension (MT) of not less than 1 g, or

wherein component A is high-pressure low-density polyethylene having the following properties (a') to (d'):

(a') an MFR of 1 to 50 g/10 min,
(b') a density of 0.915 to 0.93 g/cm$^3$,
(c') a memory effect (ME) of 1.3 to 2.2, and
(d') a melt tension (MT) of not less than 1 g.

The third an fourth embodiment of the present invention relates to a resin composition for thin-gage forms selected from films and sheets, which comprises:

Component (A): 60 to 85% by weight of an ethylene resin selected from an ethylene-vinyl acetate copolymer and high-pressure low-density polyethylene and
Component (B): 15 to 40% by weight of a copolymer of ethylene and an α -olefin having 6 to 10 carbon atoms,

said Component (B) having the following properties (a), (b), (c), and (d-2):

(a) a density (D) of 0.86 to 0.935 g/cm$^3$,
(b) an MFR of 1 to 50 g/10 mm,
(c) an elution curve showing a single peak at a peak temperature of not higher than 100°C, said elution curve being obtained by TREF, in which substantial elution may occur at temperatures other than the peak temperature, and
(d-2) an elution volume Y, in percent by weight based on the total weight of component B, at 50°C in TREF satisfying the following condition (1) or (2):

(1) $Y \leqq 10$ when the density D of component B is not less than 0.91 g/cm$^3$, or
(2) $Y \leqq -4500D + 4105$ when the density D of component B is less than 0.91 g/cm$^3$, provided that $Y \leqq 100$,

wherein component A is an ethylene-vinyl acetate copolymer having the following properties (a') to (d'):

(a') an MFR of 0.01 to 30 g/10 min,
(b') a vinyl acetate content of 3 to 15% by weight,
(c') a memory effect (ME) of 1.1 to 2.0, and
(d') a melt tension (MT) of not less than 2.5 g, or

wherein component A is a high-pressure low-density polyethylene having the following properties (a') to (d'):

(a') an MFR of 0.01 to 30 g/10 min,
(b') a density of 0.915 to 0.93 g/cm$^3$,
(c') an ME of 1.3 to 2.2, and
(d') an MT of not less than 1 g.

The resin composition for extruded forms according to the present invention is free from unevenness of resin blending, is excellent in transparency, heat sealability, heat sealing strength, tear strength, impact strength, is non-sticky with body (high rigidity), and thereby capable of providing thin-gage forms such as films or sheets with excellent workability. Accordingly, the resin composition is extremely useful as films for packaging or filling foods, such as dry foods (e.g., snack foods and instant noodles), moisture-containing foods (e.g., miso (fermented soy paste), pickles, soup and juice), frozen foods, meat, ham, etc.; small packages of soy sauce or Worcester sauce; films for packaging or filling of medical products, such as infusions, injections, powders and tablets (e.g., bag-in-box and containers for infusion solutions); small packages for shampoo or cosmetics; films for packaging or filling packaging of cassette tapes, appliances, etc.: and various covers.

Further, the resin composition for extruded forms according to the present invention exhibits excellent properties as a resin composition for laminates, such as low-temperature heat sealability, heat sealing strength, hot tack, and good balance between drawability and neck-in in processing and is therefore very useful as laminate films for packages or filling in broad range of applications, for example, films for packaging and filling of foods, such as dry foods (e.g., snack foods and instant noodles), moisture-containing foods (e.g., miso, pickles, soup and juice), frozen foods, meat, ham, etc.; small packages of soy sauce or Worcester sauce; films for packaging and filling of medical products, such as infusions, injections, powders and tablets (e.g., bag-in-box and containers for infusion solutions); small packages of shampoos or cosmetics; films for packaging or filling packaging of cassette tapes and the like goods; and various covers.

DETAILED DESCRIPTION OF THE INVENTION

(I-A) Components of the Resin Composition for Laminates

(1) Component A: (Ethylene Resin)

The ethylene resin as component A is selected from (A-1) an ethylene-vinyl acetate copolymer and (A-2) high-pressure low-density polyethylene prepared by the so-called radical polymerization process, with A-1 being preferred.

(A-1): Ethylene-vinyl Acetate Copolymer

Ethylene-vinyl acetate copolymer (A-1) having the following properties is used as Component A:

① MFR

The ethylene-vinyl acetate copolymer used as component A has an MFR of 1 to 50 g/10 min, preferably 2 to 30 g/10 min, still more preferably 3 to 20 g/10 min, as measured according to JIS K7210. If the MFR is too high, transparency deteriorates when blended with component B. If the MFR is too low, the resulting resin composition is difficult to form.

② Vinyl Acetate Content

The vinyl acetate content of the ethylene-vinyl acetate copolymer used as component A ranges from 3 to 30% by weight, preferably from 4 to 20% by weight,and still more preferably from 5 to 15% by weight. Too high a vinyl acetate content makes the formed film sticky. If the vinyl acetate content is too low, the formed film has insufficient heat sealability.

③ Memory Effect (ME)

The ethylene-vinyl acetate copolymer used as component A has a memory effect (ME) of 1.1 to 2.0, preferably 1.2 to 1.8, still more preferably 1.3 to 1.7. If the ME is too small, the composition has inferior forming stability. If the ME is too large, the composition tends to suffer from flow unevenness on forming.

④ Melt Tension (MT)

The ethylene-vinyl acetate copolymer used as component A has a melt tension (MT) of not less than 1 g, preferably not less than 1.5 g. If the MT is too small, forming properties of the composition deteriorate.

The ethylene-vinyl acetate copolymer to be used in the present invention can be selected appropriately from among commercially available products having the above-mentioned physical properties.

A-2: High-pressure Low-density Polyethylene

High-pressure low-density polyethylene used as component A has the following properties.

① MFR

High-pressure low-density polyethylene used as component A has an MFR of 1 to 50 g/10 min, preferably 2 to 30 g/10 min, and still more preferably 3 to 20 g/10 min, as measured according to JIS K7210. If the MFR is too high, neck-in which is not preferable increases. If the MFR is too low, an extrusion of the composition becomes difficult.

② Density

The high-pressure low-density polyethylene used as component A has a density of 0.915 to 0.93 g/cm$^3$, preferably 0.916 to 0.925 g/cm$^3$, and still more preferably 0.917 to 0.923 g/cm$^3$, as measured according to JIS K7112. If the density is too high, the heat sealability is reduced. If it is too low, the resulting film becomes sticky.

③ Memory Effect (ME)

The high-pressure low-density polyethylene as component A has an ME of 1.3 to 2.2, preferably 1.5 to 2.2, still preferably 1.6 to 2.2. If the ME is too small, neck-in which is not preferable increases. If the ME is too large, the resin composition is difficult to process at high speed.

④ Melt Tension (MT)

The high-pressure low-density polyethylene used as component A has an MT of not less than 1 g, preferably not less than 2.5 g, and still more preferably not less than 5 g. If the MT is too small, the forming properties deteriorate.

⑤ Activation Energy (Ea)

The activation energy (Ea) of the high-pressure low-density polyethylene used as component A is preferably not less than 4 KJ/mol, preferably from 6 to 20 KJ/mol, and still more preferably from 8 to 18 KJ/mol, at a shear rate of 24 $sec^{-1}$, as obtained from the viscosity curve. When the activation energy is outside of this range, the resulting composition has inferior forming properties.
The activation energy can be calculated from Arrhenius' viscosity formula or Andrade's viscosity formula representing the relationship between viscosity and temperature, which is described in the literature, e.g., Nakagawa Tsurutaro and Kanbe Hirotaro, Rheology, p. 604, Misuzu Shobo, and Hayashi Shizuo, Kodansha Gendaino Kagaku Series 18, Rheology, pp. 160-161,Kodansha.
More specifically, the temperature of measuring shear viscosity (η) with a capillograph type viscometer was set at 160τ(433K), 190τ (463K), and 230°C (503K). From the viscosity curve (viscosity dependence curve against shear rate) measured at each temperature was obtained the shear viscosity (η) at a shear rate of 24 $sec^{-1}$. When log was plotted as ordinate and 1/T (T = measuring temperature; K) as the abscissa, the intercept: logA was obtained. Substituting the value obtained for logA in the following equation gave an activation energy (Ea).

$$\eta = Ae^{-Ea/RT} \rightarrow \log\eta = \log A - Ea/RT$$

wherein is a shear viscosity (poise); A is a frequency factor; Ea is the activation energy (KJ/mol); R is a gas constant (B.3145 J/Kmol); and T is an absolute temperature (K).

⑥ Q Value

The high-pressure low-density polyethylene to be used in the present invention preferably has a Q value (weight average molecular weight to number average molecular weight ratio) of 4 to 20, preferably 5 to 18,and still more preferably 7 to 15, as obtained by size exclusion chromatography (SEC). If the Q value is too large, the resulting resin composition has insufficient drawability. If it is too small, neck-in increases.
The high-pressure low-density polyethylene to be used as component A in the present invention can be selected appropriately from among commercially available products having the above-mentioned physical properties.

(2) Component B (Ethylene-α -Olefin Copolymer)

Component B which can be used in the present invention is a copolymer comprising ethylene and an α -olefin having 4 to 40 carbon atoms. It is important to use an ethylene-α -olefin copolymer having the following properties① to ④ , preferably to ① to ⑤ .

① Density

The ethylene-α -olefin copolymer used as component B has a density of 0.86 to 0.935 $g/cm^3$, preferably 0.87 to 0.915 $g/cm^3$, and still more preferably 0.88 to 0.91 $g/cm^3$, as measured in accordance with JIS K7112. If the density is too high, the heat sealability is reduced. If it is too low, the resulting film becomes sticky.

② MFR

The ethylene-α -olefin copolymer used as component B has an MFR of 1 to 50 g/10 min, preferably 2 to 30 g/10 min, and still more preferably 3 to 20 g/10 min, as measured according to JIS K7210. If the MFR is too low, extrusion becomes difficult. If it is too high, sagging occurs and the forming properties decrease.

③ Peak in Elution Curve Obtained by TREF

The ethylene-α -olefin copolymer used as component B shows a single peak in the elution curve obtained by TREE The peak appears at a temperature of not higher than 100°C, preferably at from 10 to 75°C, and still more preferably at from 30 to 70°C. The elution curve may show substantial elution at temperatures other than the peak temperature.

④ Integral Elution Volume

The ethylene-α -olefin copolymer used as component B has an integral elution volume of not less than 90%, preferably not less than 95%, and still more preferably not less than 97%, by weight, at an elution temperature of 90°C in TREF, the integral elution volume being obtained by integrating the weight proportions of eluted fractions at 90°C.

Measurement of Elution Curve by TREF

Measurement of an elution curve by TREF can be carried out as follows in accordance with the principles described, e.g., in the Journal of Applied Polymer Science, Vol. 26, pp. 4217-4231 (1981) and Drafts for Symposium on Polymers (2P1C09) (1985).

That is, a polyethylene sample to be analyzed is completely dissolved in a solvent. The resulting solution is then cooled to form a thin polymer layer on the surface of an inactive carrier, such as beads, in such a manner that the polymer components which crystallize easily are first built up to form the inner part of the layer, closer to the surface of the inactive carrier, and the polymer components which do not crystallize easily are then built up thereon to form the outer part of the layer. On raising the temperature continuously or in increments, the amorphous components of the polymer composition, i.e., the short-chain branched portions having relatively high degrees of branching begin to elute at low temperatures. As the temperature increases, portions having less branching are gradually eluted. Finally, the branchless straight-chain portions elute to complete the TREF measurement. The concentration of the fraction eluted at each temperature is detected, and each elution volume calculated is plotted against the elution temperature to obtain a graphically represented elution curve which reveals the component distribution of the polymer.

⑤ Q Value

The ethylene- olefin copolymer used as component B has a Q value (weight average molecular weight to number average molecular weight ratio) of not more than 4, preferably not more than 3, and still more preferably not more than 2.5, as obtained by Size Exclusion Chromatography (SEC).

Preparation of Ethylene-α -Olefin Copolymer

The ethylene-α -olefin copolymer used as component B of the present invention can be prepared by known processes disclosed in, e.g., EP-69951-B, Japanese Patent Laid-Open Nos. 59-95292 and 60-35005, EP-128046-A, EP-129368-A, EP-128045-A, EP-129414-A, EP-185918-A, Japanese Patent Laid-Open No. 3-163088, European Patent Laid-Open No. 420436, U.S. Patent 5,055,438, and International Patent Laid-Open No. W091/04257. That is, ethylene as a major monomer and an α -olefin as a comonomer are copolymerized using a metallocene catalyst, particularly a metallocene-alumoxane catalyst, or a catalyst system comprising a metallocene compound and a compound capable of reacting with a metallocene compound to form a stable ion as disclosed in International Patent Laid-Open No. W092/01723.

The above-mentioned compound capable of reacting with a metallocene compound to form a stable ion is an ionic compound comprising an ion pair of a cation and an anion or an electrophilic compound, either of which is reactive with a metallocene compound to form a stable ion to thereby provide an active species for polymerization.

The above-mentioned ionic compound is represented by formula (I):

$$[Q]^{m+} [Y]^{m-} \qquad (I)$$

wherein Q represents a cation component; Y represents an anion component; and m is an integer of not less than 1.

The cation component represented by Q includes carbonium cation, tropylium cation, ammonium cation, oxonium cation, sulfonium cation, phosphonium cation, and, in addition, a metallic or organometallic cation which itself is easily reduced.

The cation component Q may be not only a cation that donates a proton as disclosed in Japanese Patent Publication No. 1-501950, etc., but a cation that does not donate a proton. Specific examples of the cations of the latter type include triphenylcarbonium, diphenylcarbonium, chloroheptatrienium, indenium, triethylammonium, tripropylammonium, tributylammonium, N,N-dimethylanilinium, dipropylammonium, dicyclohexylammonium, triphenylphosphonium, trimethylphosphonium, tri(dimethylphenyl)phosphonium, tri(methylphenyl)phosphonium, triphenylsulfonium, triphenyloxonium, triethyloxonium, pyrylium, silver ion, gold ion, platinum ion, palladium ion, mercury ion, and ferrocenium ion.

The anion component represented by Y is a component capable of reacting with a metallocene compound to form a stable ion and includes organoboron compound anion, organoaluminum compound anion, organogallium compound anion, organophosphorus compound anion, organoarsenic compound anion, and organoantimony compound anion. Specific examples of such anions include tetraphenyl boron, tetrakis(3,4,5-trifluorophenyl) boron, tetrakis(3,5-di(trifluoromethyl)phenyl) boron, tetrakis(pentafluorophenyl) boron, tetraphenyl aluminum, tetrakis(3,4,5-trifluorophenyl) aluminum, tetrakis(3,5-di(trifluoromethyl)phenyl) aluminum, tetrakis(pentafluorophenyl) aluminum, tetraphenyl gallium, tetrakis(3,4,5-trifluorophenyl) gallium, tetrakis(3,5-di(t-butyl)phenyl) gallium, tetrakis(pentafluorophenyl) gallium, tetraphenyl phosphorus, tetrakis(pentafluorophenyl) phosphorus, tetraphenyl arsenic, tetrakis(pentafluorophenyl) arsenic, tetraphenyl antimony, tetrakis(pentafluorophenyl) antimony, decaborate, undecaborate, carbadodecaborate, and decachlorodecaborate.

The above-mentioned electrophilic compound is a known Lewis acid capable of forming a stable ion on reacting with a metallocene compound to thereby provide an active species for polymerization. Such electrophilic compounds include various halogenated metal compounds and metal oxides known as solid acids. Specifically, halogenated magnesium and Lewis acid type inorganic oxides of may be mentioned as examples of the electrophilic compounds.

α -Olefin

The α -olefin which can be copolymerized with ethylene is an α -olefin containing 6 to 10 carbon atoms, such as 1-hexene, 1-octene, 1-heptene, 4-methylpentene-1, 4-methylhexene-1, or 4,4-dimethylpentene-1.

The ethylene-α -olefin copolymer as component B preferably comprises 40 to 98% by weight, still preferably 50 to 95% by weight, most preferably 70 to 90% by weight, of ethylene and 2 to 60% by weight, still preferably 5 to 50% by weight, most preferably 10 to 30% by weight, of at least one of the above-mentioned α -olefins.

Copolymerization

Methods which may be used to copolymerize ethylene and the α -olefin include gaseous phase methods, slurry methods, solution methods, and high-pressure ion polymerization methods. Preferred are solution methods and high-pressure ion polymerization methods with high-pressure ion polymerization methods being particularly preferred.

The above-mentioned high-pressure ion polymerization method is a method for continuous production of an ethylene-based polymer as disclosed in Japanese Patent Laid-Open Nos. 56-18607 and 58-225106. The method is carried out under a pressure of not less than 100 kg/cm$^2$, preferably of from 200 to 2000 kg/cm$^2$, and at a temperature of not lower than 125°C, preferably of from 130 to 250°C, and most preferably of from 150 to 200°C.

(II-A) Mixing Ratio

Components A and B are mixed at an A:B weight ratio of from 85:15 to 60:40.

(III-A) Preparation of Resin Composition for Laminates

(1) Blending

The resin composition for laminates according to the present invention can be prepared by blending the ethylene resin as component A and the ethylene-α -olefin copolymer as component B in a conventional manner for the preparation of general resin compositions.

Specifically, the resin composition can be prepared by melt-kneading components A and B in an extruder, a Brabender Plastograph, a Banbury mixer, a kneader-blender, etc., followed by pelletizing in a usual manner, or by dry blending components A and B in a V blender, etc.

(2) Other Additives

If desired, the resin composition for laminates according to the present invention may contain auxiliary additives generally used in resin compositions, such as antioxidants, anti-blocking agents, slip agents, antistatic agents, nucleating agents, heat stabilizers, light stabilizers, ultraviolet absorbers, neutralizers, anti-fogging agents, colorants, and the like. The composition may further contain other resinous components, such as ethylene-based polymers other than components A and B, as long as the effects of the present invention are not impaired.

(3) Physical Properties of the Resin Composition

The resin composition for laminates according to the present invention preferably has an MFR of from 2 to 50 g/10 min, more preferably from 3 to 30 g/10 min, and an ME of from 1.2 to 2.2, more preferably 1.4 to 2.0.

(IV-A) Forming

Pellets of the resin composition prepared as described in (III-A)(1) above can be processed to a film. Methods for producing a film include dry lamination, extrusion lamination, sandwich lamination, coextrusion, and the like. The resin composition can be, for example, applied onto substrates of various types by extrusion coating, or the resin composition and a substrate are coextruded, to obtain a laminated film for wrapping or packaging. Of the above film formation techniques, extrusion lamination in which a resin composition is laminated onto a substrate is preferred. The resin composition may also be used as a base layer in the production of a sandwich laminate composed of a base layer and a sealant layer.

The substrate onto which the resin composition of the present invention may be applied includes paper; metal foil (e.g., aluminum foil); cellophane; woven or nonwoven cloth; and films of high polymers, such as olefin polymers (e.g., high-, medium- or low-density polyethylene, ethylene-vinyl acetate copolymers, ethylene-acrylate copolymers, ionomers, propylene-based polymers, poly-1 -butene, and poly-4-methylpentene-1), vinyl polymers (e.g., polyvinyl chloride, polyvinylidene chloride, polystyrene, polyacrylate, and polyacyrlonitrile), polyamides (e.g., nylon 6, nylon 66, nylon 7, nylon 10, nylon 11, nylon 12, nylon 610, and polymetaxylene adipamide), polyesters (e.g., polyethylene terephthalate, polyethylene terephthalate/isophthalate, and polybutylene terephthalate), polyvinyl alcohol, ethylene-vinyl alcohol copolymers, polycarbonates, and polyurethanes.

(I-B) Components of Resin Composition for Thin-Gage Forms

(1) Component A (Ethylene Resin)

The ethylene resin used as component A to form the composition for thin-gage forms selected from sheets and films is selected from (A-1) an ethylene-vinyl acetate copolymer and (A-2) high-pressure low-density polyethylene prepared by the so-called radical polymerization process.

(A-1): Ethylene-Vinyl Acetate Copolymer

The ethylene-vinyl copolymer (A-1) with has the following properties is used in the present invention:

① MFR

The ethylene-vinyl acetate copolymer used as component A has an MFR of 0.01 to 30 g/10 min, preferably 0.1 1 to 20 g/10 min, and still more preferably 0.3 to 10 g/10 min, most preferably 0.3 to 5 g/10 min, as measured according to JIS K7210. If the MFR is too high, transparency deteriorates when blended with component B. If the MFR is too low, the resulting resin composition is difficult to form.

② Vinyl Acetate Content

The vinyl acetate content of the ethylene-vinyl acetate copolymer used as component A ranges from 3 to 15% by weight, preferably from 4 to 12% by weight, and still more preferably from 5 to 10% by weight. Too a high vinyl acetate content makes the formed film sticky and workability properties decrease. If the vinyl acetate content is too low, the formed film has insufficient heat sealability.

③ Memory Effect (ME)

The ethylene-vinyl acetate copolymer used as component A has an ME of 1.1 to 2.0, preferably 1.2 to 1.8, and still more preferably from 1.3 to 1.7. If the ME is too small, the composition has reduced forming stability. If the ME is too large, the composition tends to suffer from flow unevenness on forming.

④ Melt Tension (MT)

The ethylene-vinyl acetate copolymer used as component A has an MT of not less than 2.5 g, preferably not less than 5 g, and still more preferably not less than 10 g. If the MT is too small, forming stability decreases.
The ethylene-vinyl acetate copolymer to be used in the present invention can be appropriately selected from among commercially available products having the above-mentioned physical properties.

(A-2): High-pressure Low-density Polyethylene

High-pressure low-density polyethylene used as component A has the following properties.

① MFR

The high-pressure low-density polyethylene used as component A has an MFR of 0.01 to 30 g/10 min, preferably 0.5 to 10 g/10 min, and still more preferably 0.7 to 8 g/10 min, as measured according to JIS K7210. If the MFR is too high, the resulting forms have insufficient strength. If the MFR is too low, extrusion becomes difficult.

② Density

The high-pressure low-density polyethylene used as component A has a density of 0.915 to 0.93 $g/cm^3$, preferably 0.916 to 0.925 $g/cm^3$, and still more preferably 0.917 to 0.923 $g/cm^3$, as measured in accordance with JIS K7112. If the density is too high, heat sealability is reduced. If it is too low, the resulting film becomes sticky.

③ Memory Effect (ME)

The high-pressure low-density polyethylene used as component A has an ME of 1.3 to 2.2, preferably 1.4 to 2.0, and still more preferably 1.5 to 1.9. If the ME is too small, the extrusion load increases. If the ME is too large, flow unevenness tends to occur on forming.

④ Melt Tension (MT)

The high-pressure low-density polyethylene used as component A has an MT of not less than 1 g, preferably not less than 2.5 g, and still more preferably not less than 5 g. If the MT is too small, the forming properties of the resin composition become instable.

⑤ Activation Energy (Ea)

Preferably, the activation energy (Ea) of the high-pressure low-density polyethylene used as component A at a shear rate of 24 $sec^{-1}$ is not more than 20 KJ/mol, preferably from 2 to 17 KJ/mol, still more preferably from 4 to 15 KJ/mol, most preferably 8 to 13 KJ/mol, as obtained from the viscosity curve. When the activation energy is outside of this range, the resulting composition has reduced forming properties.
The activation energy can be calculated from Arrhenius' viscosity formula or Andrade's viscosity formula representing the relationship between viscosity and temperature, which is described in the literature, e.g., Nakagawa Tsurutaro and Kanbe Hirotaro, <u>Rheology</u>, p. 604, Misuzu Shobo, and Hayashi Shizuo, <u>Kodansha Gendaino Kagaku Series 18, Rheology</u>, pp. 160-161, Kodansha.
More specifically, the temperature for measuring shear viscosity (η) with a capillograph type viscometer was set at 160°C (433K), 190°C (463K), and 230τ (503K). From the viscosity curve (viscosity dependence curve to shear rate) measured at each temperature was obtained the shear viscosity (η) at a shear rate of 24 $sec^{-1}$. When log was plotted as ordinate and 1/T (T = measuring temperature; K) as abscissa, the intercept: logA was obtained. Substituting the value obtained for logA in the following equation to obtain activation energy (Ea).

$$\eta = Ae^{-Ea/RT} \rightarrow \log\eta = \log A - Ea/RT$$

wherein η is a shear viscosity (poise); A is a frequency factor; Ea is the activation energy (KJ/mol); R is a gas constant (8.3145 J/Kmol); and T is an absolute temperature (K).

The high-pressure low-density polyethylene to be used as component A in the present invention can be selected appropriately from among commercially available products having the above-mentioned physical properties.

(2) Component B (Ethylene-α -Olefin Copolymer)

Component B which can be used in the present invention is a copolymer comprising ethylene and an α -olefin having 6 to 10 carbon atoms. It is important to use an ethylene-α -olefin copolymer having the following properties ① to ④ , preferably ① to ⑥ .

① Density

The ethylene-α -olefin copolymer used as component B has a density of 0.86 to 0.935 g/cm$^3$, preferably 0.87 to 0.915 g/cm$^3$, and still more preferably 0.88 to 0.91 g/cm$^3$, as measured in accordance with JIS K7112. If the density is too high, the heat sealability is reduced. If it is too low, the resulting film becomes sticky.

② MFR

The ethylene-α -olefin copolymer used as component B has an MFR of 1 to 50 g/10 min, preferably 1 to 30 g/10 min, still more preferably 1 to 20 g/10 min, and most preferably 1 to 10 g/10 min, as measured according to JIS K7210. If the MFR is too low, extrusion becomes difficult. If it is too high, the composition undergoes a sag and has poor forming properties.

③ Peak in Elution Curve Obtained by TREF

The ethylene-α -olefin copolymer used as component B shows a single peak in the elution curve obtained by TREF at a peak temperature of not higher than 100°C, preferably from 10 to 75°C, and still more preferably from 30 to 70°C. The elution curve may show substantial elution at temperatures other than the peak temperature.

④ Elution Volume at 50°C in TREF

The ethylene-α -olefin copolymer as component B has a specific elution volume Y, in percent by weight based on the total weight of component B, at 50°C in TREF satisfying the following condition (i) or (ii):

(i) $Y \leqq 10$, preferably $Y \leqq 7$ when the density D of component B is not less than 0.91 g/cm$^3$, or
(ii) $Y \leqq -4500D + 4105$ (provided that $Y \leqq 100$), preferably $Y \leqq -4650D + 4238$, when the density D of component B is less than 0.91 g/cm$^3$.

<u>Measurement of Elution Curve by TREF</u>

Measurement of an elution curve by TREF can be carried out as follows in accordance with the principles described, e.g., in <u>the Journal of Applied Polymer Science,</u> Vol. 26, pp. 4217-4231 (1981) and <u>Drafts for Symposium on Polymers</u> (2P1C09)(1985).

That is, a polyethylene sample to be analyzed is completely dissolved in a solvent. The resulting solution is then cooled to form a thin polymer layer on the surface of an inactive carrier, such as beads, in such a manner that the polymer components which crystallize easily are first built up to form the inner part of the layer, closer to the surface of the inactive carrier, and the polymer components which do not crystallize easily are then built up thereon to form the outer part of the layer. On raising the temperature continuously or in increments, the amorphous portions of the polymer composition, i.e., the short-chain branched components having relatively high degrees of branching begin to elute at low temperatures. As the temperature increases, portions having less branching gradually elute. Finally the branchless straight-chain portions elute to complete the TREF measurement. The concentration of the fraction eluted at each temperature is detected, and each elution volume calculated is plotted against the elution temperature to obtain a graphically represented elution curve, which reveals the component distribution of the polymer.

⑤ Integral Elution Volume in TREF

The ethylene-α -olefin copolymer as component B has an integral elution volume of not less than 90%, preferably not less than 95%, still preferably not less than 97%, by weight, at an elution temperature of 90°C in TREF, the integral elution volume being obtained by integrating the weight proportions of eluted fractions at 90°C.
The measurement of an elution curve by TREF can be made in the same manner as described above.

⑥ Q Value

The ethylene-α -olefin copolymer as component B has a Q value (weight average molecular weight to number average molecular weight ratio) of not more than 3.5, preferably not more than 3, still more preferably not more than 2.5, as obtained by Size Exclusion Chromatography (SEC).

Preparation of Ethylene-α -Olefin Copolymer

Processes for preparing the ethylene-α -olefin copolymer which can be used as component B of the resin composition for thin-gage forms and catalysts used therefor are the same as described above with respect to component B to be used in the resin composition for laminates.

(II-B) Mixing Ratio

Components A and B are mixed at an A:B weight ratio of from 85:15 to 60:40.

(III-B) Preparation of Resin Composition for Thin-Gage Forms

(1) Blending

The resin composition for laminates according to the present invention can be prepared by blending the ethylene-based resin as component A and the ethylene-α -olefin copolymer as component B in a manner conventional for the preparation of general resin compositions.
Specifically, the resin composition can be prepared by melt-kneading components A and B in an extruder, a Brabender Plastograph, a Banbury mixer, a kneader-blender, etc., followed by pelletizing in a usual manner, or by dry blending components A and B in a V blender, etc.

(2) Other Additives

If desired, the resin composition for thin-gage forms according to the present invention may contain auxiliary additives generally used in resin compositions, such as antioxidants, anti-blocking agents, slip agents, antistatic agents, nucleating agents, heat stabilizers, light stabilizers, ultraviolet absorbers, neutralizers, anti-fogging agents, colorants, and the like. The composition may further contain other resinous components, such as ethylene-based polymers other than components A and B, as long as the effects of the present invention are not impaired.

(3) Physical Properties of the Resin Composition

The resin composition for thin-gage forms according to the present invention preferably has an MFR of from 0.5 to 20 g/10 min, still more preferably from 0.7 to 10 g/10 min, and most preferably from 0.7 to 5 g/10 min.

(IV-B) Forming

Pellets of the resin composition prepared as described in (III-B)(1) above can be formed into thin-gage forms, such as films and sheets. For example, blown films, extruded films, cast films, etc. are obtained by blown film extrusion (e. g., air-cooled blown film extrusion, two-stage air-cooled blown film extrusion, water-cooled blown film extrusion), T-die extrusion, or casting.
The present invention will now be illustrated in greater detail with reference to the Examples, Comparative Examples, and Test Examples.

[I] Measurement and Evaluation of Physical Properties

Physical properties of resin compositions prepared and forms obtained therefrom in the Examples and Comparative Examples were measured and evaluated in accordance with the methods described below.

(1) Measurement

(a) MFR: Measured according to JIS K7210 (190°C, 2.16 kg load).
(b) Density: Measured according to JIS K7112.
(c) Elution Curve: An elution curve by TREF (Temperature Rising Elution Fractionation) was obtained as follows. A polymer to be analyzed is once completely dissolved in a solvent at a high temperature. Thereafter, the solution is cooled to form a thin polymer layer on the surface of an inactive carrier. Then, temperature is raised continuously or incrementally, and polymer fractions thus eluted are collected. The concentrations of each fraction each eluted at each given temperature are successively detected, and each elution volume is plotted against elution temperature to obtain an elution curve which represents the composition distribution of the polymer.

The measurement was made with a cross fractionating apparatus "CFC T150A", manufactured by Mitsubishi Petrochemical Co., Ltd., according to the operation manual attached thereto. The cross fractionating apparatus is composed of one-line connected two mechanisms; a TREF mechanism for fractionating a sample polymer utilizing differences in dissolving temperature among polymer components and an SEC mechanism for separating each fraction by the size of molecules.

First, a sample polymer to be analyzed was dissolved in o-dichlorobenzene at 140°C to a concentration of 4 mg/ml, and the solution was put into the sample loop of the apparatus. Thereafter, the apparatus automatically performs measurements at set conditions.

A 0.4 ml portion of the sample solution in the sample loop was fed to a stainless steel-made TREF column (inner diameter: 4 mm; length: 150 mm) packed with glass beads as an inactive carrier, followed by cooling from 140°C to 0°C at a cooling speed of 1°C/min, whereby the surface of the glass beads was coated with a layer of the polymer in such a manner that highly crystalline polymer components (components which are easily crystallized) were first built up to form the inner part of the layer, and low crystalline polymer components which do not crystallize easily were then built up thereon to form the outer part of the layer. After maintaining the TREF column at 0°C for 30 minutes, a 2 ml-fraction containing a polymer component remaining dissolved in the solvent at 0°C was withdrawn from the TREF column and transferred to an SEC column unit composed of three SEC columns "AD80M/S", produced by Showa Denko K.K., at a flow rate of 1 ml/min.

While the SEC mechanism performs separation by molecular size, the temperature of the TREF column was raised to the next elution temperature (5°C), at which the column was maintained for about 30 minutes. Thus, the SEC column unit successively performed the separation of each eluted fraction at an interval of 39 minutes. The elution temperature was raised stepwise from 0°C to 5, 10, 15, 20, 25, 30, 35, 40, 45, 49, 52, 55, 58, 61, 64, 67, 70, 73, 76, 79, 82, 85, 88, 91, 94, 97, 100, 102, 120, and 140°C.

The portions of the sample solution separated by SEC were passed to an infrared spectrophotometer attached to the apparatus, where the absorbance at a wavelength of 3.42 assigned to the stretching vibration of methylene, which corresponds to the polymer concentration, was measured. Thus, chromatograms for the individual fractions eluted at various elution temperatures were obtained.

Thereafter, data processing software provided in the apparatus worked to draw a base line in each of the chromatograms resulting from the above measurement and to perform the following calculations. The individual areas of the chromatograms were integrated to obtain an integral elution curve. The integral elution curve was differentiated with respect to temperature, thereby obtaining a differential elution curve. The graphs resulting from these calculations were output to a printer connected to the apparatus. In the thus output graph of the differential elution curve, the abscissa represents the elution temperature with a dimension of 89.3 mm of the abscissa corresponding to a change through 100°C, and the ordinate represents the differential elution volume with a dimension of 76.5 mm of the ordinate corresponding to a change through 0.1 when the entire integral elution volume is taken as 1.0, and each differentiated quantity consists of a change in elution volume with a change in temperature by 1°C.
(d) Memory Effect (ME): Measured with a melt indexer used in JIS K7210 at a cylinder temperature of 240τ and at a constant extrusion rate of 3 g/min.

A sample polymer was put into the apparatus, and only the piston was placed thereon. Six minutes later, with a graduated cylinder containing ethyl alcohol right under the orifice, a prescribed load was imposed to collect a straight extrudate, and the diameter (D) of the extrudate was measured with a micrometer. The memory effect ME of the sample was calculated by the following equation:

$$ME = D/D_0 \; (D_0\text{: diameter of the orifice})$$

(e) MT (Melt Tension): Capillograph 1B PMD-C, manufactured by Toyo Seiki K.K., was used for measurement. A sample polymer was melt extruded at a resin temperature of 190°C at a rate of 1 cm/min through a die (length: 8.00 mm; inner diameter: 2.095 mm; outer diameter: 9.50 mm), and the extruded filament was taken off at a gradually increasing take-off speed. The stress at break of the filament was taken as an MT.

(f) Q Value: The Q value (weight average molecular weight/number average molecular weight ratio) was obtained by molecular weight measurement by size exclusion chromatography (SEC) under the following conditions. A universal calibration curve was prepared by using monodisperse polystyrene, and the molecular weights were calculated as those of straight-chain polyethylene.

Chromatograph: Waters Model 150C GPC
Column: three AD80M/S columns, manufactured by Showa Denko K.K.
Solvent: o-dichlorobenzene
Flow Rate: 1 ml/min
Concentration: 2 mg/ml
Temperature: 140°C
Charged Amount: 200 µl

(g) Activation Energy (Ea): The viscosity of a sample polymer at a prescribed temperature was measured with Capillograph 1B PMD-C (capillary diameter: 1 mm; length: 10 mm), manufactured by Toyo Seiki K.K., with the rate of extrusion being automatically set at 2.5, 5, 10, 20, 50, 100 and 200 m/min. The activation energy (Ea) was calculated by the above-described equation.

(2) Evaluation

(a) 3 kg-Load Heat Sealing Temperature of Thin-Gage Forms: A laminate film was heat sealed using a platen heat sealer manufactured by Toyo Seiki K.K. at a sealing pressure of 2 kg/cm$^2$ for a sealing period of 1 second at a temperature increasing incrementally from 80°C by 5°C. The heat sealing strength (kg/15 mm width) of the laminated film was measured with a tensile tester at a pulling speed of 500 m/min at a peel angle of 180. The results obtained were plotted as abscissa, and the heat sealing temperature as ordinate. The temperature at which a heat sealing strength of 3 kg/15 mm was obtained was read as a 3 kg-load heat sealing temperature.

(b) Heat Sealing Strength of Thin-Gage Forms: The yield point in the measurement of heat sealing temperature described in (a) above was taken as heat sealing strength.

(c) Hot Tack: A sample film was heat sealed under the following conditions: a sealing bar dimension of 200 mm x 30 mm; a sealing pressure of 1 kg/cm$^2$; a sealing period of 0.5 second; a load of 50 g; a chuck pressure of 1 kg/cm$^2$; and a sealing temperature increasing stepwise from 90°C up to 150°C by 5°C. After the heat sealing, the sealed area was maintained in a loaded state by a load of 50 g until peeling of the sealed area stopped. The peel length was measured to an accuracy of 1 mm. The temperature range in which the peel length was within 1 to 2 mm was taken as an indication of hot tack.

(d) Surging: A sample resin composition was extrusion laminated with a thickness of 20 µm on Kraft paper. When a variation of half the width of the film (L/2) was less than 1.5 mm, the film was rated "good" (○). When that variation was 1.5 mm or greater, the film was rated "bad" (×).

(e) Drawability (m/min): The rotational speed of an extruder was set at 100 rpm, and a sample resin composition was extrusion laminated on Kraft paper while increasing the take-off speed gradually. The take-off speed at which the laminate film was broken was measured.

(f) Neck-in: A sample resin composition was extrusion laminated with a thickness of 20 µm on Kraft paper in the same manner as in (d) above. The neck-in was obtained as the difference $L_0$ - L, wherein $L_0$ represents the effective width of the die of the extruder, and L represents the width of the film laminated on Kraft paper.

(g) Resin Pressure: The pressure of a sample resin composition during extrusion lamination was measured with a pressure gauge fitted to the die head of the extruder.

(h) Haze: Measured in accordance with JIS K7105.

(i) Light Scattering Intensity (LSI): Measured on a test piece (20 mm x 30 mm) with a light scattering photometer "LSI Tester", manufactured by Toyo Seiki K.K.

(j) 300 g-Load Heat Sealing Temperature of Laminate: A laminate film was heat sealed using a platen heat sealer manufactured by Toyo Seiki K.K. at a sealing pressure of 2 $kg/cm^2$ for a sealing period of 1 second at a temperature increasing incrementally from 80°C by 5°C. The heat sealing strength (g/15 mm width) of the laminate film was measured with a tensile tester at a pulling speed of 500 m/min at a peel angle of 180. The results obtained were plotted as abscissa, and the heat sealing temperature as ordinate. The temperature at which a heat sealing strength of 300 g/15 mm width was obtained was read as a 300 g-load heat sealing temperature.

(k) Heat Sealing Strength of Laminate: The maximum strength in the measurement of heat sealing temperature described in (j) above was taken as heat sealing strength.

(l) Puncture Impact Strength: Measurement was carried out according to JIS P8134 which specifies an impact punching strength testing method for paper board, corrugated board, etc. The impact punching strength test is for measuring the amount of work required for a punch of a tester having a given shape and a given dimension to pierce a test piece by impact. Specifically, a 10 cm wide and 130 cm long sample film cut out of a blown film was tested using the equipment and procedure specified in JIS P8134. Measurement was made on 12 sites per sample. The puncture impact strength was calculated for each measured value according to the following formula, and a mean was obtained.

Puncture Impact Strength (kg·cm/cm) = Energy Measured (kg·cm)/Film Thickness (cm)

[II-A] Examples of Resin Composition for Laminates

In Examples of resin compositions for laminates, the following ethylene resins were used as component A.

(1) Ethylene-Vinyl Acetate Copolymer

EVA① : MFR = 9 g/10 min; vinyl acetate content = 10 wt%; ME = 1.5; MT = 1.5 g
EVA② : MFR = 13 g/10 min; vinyl acetate content = 14 wt%; ME = 1.4; MT = 1.3 g
EVA③ : MFR = 8 g/10 min; vinyl acetate content = 7 wt%; ME = 1.6; MT = 1.8 g

(2) High-pressure Low-density Polyethylene

LDPE① : MFR = 9 g/10 min; density = 0.919 $g/cm^3$; ME = 2.1; MT = 5 g; activation energy (Ea) = 11 kJ/mol; Q value = 14
LDPE② : MFR = 14 g/10 min; density = 0.919 $g/cm^3$; ME = 1.9; MT = 3 g; activation energy (Ea) = 14 kJ/mol; Q value = 12

EXAMPLE A-1

Preparation of Ethylene-α-Olefin Copolymer① (Component B)

A catalyst was prepared using the method described in EP-185918-A. Specifically, 2.0 mmol of complex ethylenebis (4,5,6,7-tetrahydroindenyl)zirconium dichloride was mixed with methyl alumoxane (produced by Toyo Stauffer K.K.) in an amount 1000 times the molar amount of the complex, and the resulting mixture was diluted with toluene to prepare 10 liters of a catalyst solution. Polymerization was performed in the following manner by using the thus prepared catalyst.

To an agitation autoclave type continuous reactor having an inner volume of 1.5 liters was fed a mixture of ethylene and 1-hexene at such a mixing ratio to give a 1-hexene proportion of 80 wt% and allowed to react at 165°C while maintaining the inner pressure at 1600 $kg/cm^2$.

After completion of the reaction, an ethylene-1-hexene copolymer (1 -hexene content: 20 wt%) was obtained (hereinafter designated ethylene-α -olefin copolymer ① ). The resulting copolymer had an MFR of 13 g/10 min, a density of 0.90 $g/cm^3$, and a Q value of 2. The TREF elution curve of ethylene-α -olefin copolymer ① showed a single peak at a peak temperature of 55°C and also some elution volumes other than the peak elution volume. The integral elution volume at 90°C was 100%.

Preparation of Resin Composition for Laminates

A mixture consisting of 70 wt% of EVA ① as component A and 30 wt% of ethylene-α -olefin copolymer ① as component B was melt-kneaded in a single screw extruder having a diameter of 40 mm at 180°C to prepare a resin composition in the form of pellets.

Evaluation

The resulting pellets were melt-kneaded and extruded at 240°C from a T die having a width of 360 mm of a single screw extruder having a diameter of 40 mm into a 30 μm thick film and laminated on a previously prepared laminated film composed of a 30 μm thick LDPE film and a 15 μm thick biaxially oriented nylon film to obtain a three-layered laminate with the LDPE layer as an intermediate layer.

The heat sealing strength and hot tack of the resulting laminate were evaluated.

In the same manner as described above, the pellets were extrusion-laminated on Kraft paper to obtain a laminate having a 20 μm thick resin layer on the Kraft paper, and the neck-in and surging of the resin layer were evaluated. The ductility at 100 rpm as a rotational speed of the extruder was also evaluated. The results of the evaluation are shown in Table A-1 below.

EXAMPLE A-2

A resin composition for laminates was prepared, formed into films, and evaluated in the same manner as in Example A-1, except for using EVA ② as component A. The results of evaluation are shown in Table A-1.

EXAMPLE A-3

A resin composition for laminates was prepared, formed into films, and evaluated in the same manner as in Example A-1, except for using EVA ③ as component A. The results of evaluation are shown in Table A-1.

EXAMPLE A-4

A resin composition for laminates was prepared, formed into films, and evaluated in the same manner as in Example A-1, except for using LDPE ① as component A and changing the forming temperature to 280°C. The results of evaluation are shown in Table A-1.

EXAMPLE A-5

A resin composition for laminates was prepared, formed into films, and evaluated in the same manner as in Example A-4, except for using LDPE ② as component A. The results of evaluation are shown in Table A-1.

EXAMPLE A-6

Preparation of Ethylene-α -Olefin Copolymer ② (Component B)

A catalyst was prepared using the method described in EP-185918-A. Specifically, 2.0 mmol of complex ethylenebis (4,5,67-tetrahydroindenyl)zirconium dichloride was mixed with methyl alumoxane (produced by Toyo Stauffer K.K.) in an amount 1000 times the molar amount of the complex, and the resulting mixture was diluted with toluene to prepare 10 liters of a catalyst solution. Polymerization was performed in the following manner by using the thus prepared catalyst.

To an agitation autoclave type continuous reactor having an inner volume of 1.5 liters was fed a mixture of ethylene and 1-hexene at such a mixing ratio to give a 1-hexene proportion of 78 wt% and allowed to react at 150°C while maintaining the inner pressure at 1100 kg/cm$^2$.

After completion of the reaction, an ethylene-1-hexene copolymer (1 -hexene content: 10 wt%) was obtained (hereinafter designated ethylene-α -olefin copolymer ② ). The resulting copolymer had an MFR of 4 g/10 min, a density of 0.913 g/cm$^3$. and a Q value of 2. The TREF elution curve of ethylene-α -olefin copolymer ② showed a single peak at a peak temperature of 72°C with no other elution volume. The integral elution volume at 90°C was 100%.

A resin composition was prepared in the same manner as in Example A-1, except for using ethylene-α -olefin copolymer ② as component B. The resin composition was formed into films and evaluated in the same manner as in Example A-1. The results obtained are shown in Table A-1.

EXAMPLE A-7

A resin composition was prepared, formed into films, and evaluated in the same manner as in Example A-4, except for using LDPE ① as component A and ethylene-α -olefin copolymer ② as component B. The results of evaluation are shown in Table A-1.

COMPARATIVE EXAMPLE A-1

A resin composition was prepared, formed into films, and evaluated in the same manner as in Example A-1, except for using EVA ① alone (no component B was used). The results of evaluation are shown in Table A-2.

COMPARATIVE EXAMPLE A-2

A resin composition was prepared, formed into films, and evaluated in the same manner as in Example A-4, except for using LDPE ① alone (no component B was used). The results of evaluation are shown in Table A-2.

COMPARATIVE EXAMPLE A-3

A resin composition was prepared, formed into films, and evaluated in the same manner as in Example A-4, except for using no component A. While the results of evaluation are shown in Table A-2, the resin composition failed to provide such a film that could be evaluated with respect to all the testing items.

Table A-1

| | Example No. | | | |
|---|---|---|---|---|
| | A-1 | A-2 | A-3 | A-4 |
| Component A | | | | |
| | EVA① | EVA② | EVA③ | LDPE① |
| Component B | | | | |
| Ethylene-α -olefin | | | | |
| copolymer | ① | ① | ① | ① |
| Ratio | | | | |
| Comp. A : Comp. B | 70:30 | 70:30 | 70:30 | 70:30 |
| Composition | | | | |
| MRF (g/10 min.) | 10 | 12 | 9 | 10 |
| ME (-) | 1.4 | 1.3 | 1.5 | 1.8 |
| Properties of laminate | | | | |
| Heat-sealing temperature | | | | |
| at 3 kg load (℃) | 110 | 110 | 112 | 120 |
| Heat-sealing strength (kg/15mm) | 4.5 | 4.4 | 4.0 | 4.5 |
| Hot-tack (℃) | 15 | 15 | 15 | 15 |
| Surging | ○ | ○ | ○ | ○ |
| Drawability (m/min.) | 180 | 180 | 200< | 140 |
| Neck-in (mm) | 55 | 55 | 55 | 20 |
| Resin pressure ($kg/cm^2$) | 36 | 36 | 31 | 20 |

Note:

○ good formation

× bad formation

Table A-1 (continued)

| | Example No. A-5 | A-6 | A-7 |
|---|---|---|---|
| **Component A** | LDPE② | EVA① | LDPE① |
| **Component B** | | | |
| Ethylene-α-olefin copolymer | ① | ② | ② |
| **Ratio** | | | |
| Comp. A : Comp. B | 70:30 | 70:30 | 70:30 |
| **Composition** | | | |
| MRF (g/10 min.) | 14 | 7 | 7 |
| ME (-) | 1.7 | 1.4 | 1.9 |
| **Properties of laminate** | | | |
| Heat-sealing temperature at 3 kg load (°C) | 120 | 117 | 124 |
| Heat-sealing strength (kg/15mm) | 4.5 | 4.5 | 4.5 |
| Hot-tack (°C) | 15 | 15 | 15 |
| Surging | ○ | ○ | ○ |
| Drawability (m/min.) | 150 | 150 | 120 |
| Neck-in (mm) | 30 | 54 | 20 |
| Resin pressure ($kg/cm^2$) | 20 | 40 | 30 |

Note:
○ good formation
× bad formation

Table A-2

| | Comparative Example No. | | |
|---|---|---|---|
| | A-1 | A-2 | A-3 |
| Component A | EVA① | LDPE① | - |
| Component B | | | |
| Ethylene-α -olefin copolymer | - | - | ① |
| Ratio | | | |
| Comp. A : Comp. B | 100:0 | 100:0 | 0:100 |
| Composition | | | |
| MRF (g/10 min.) | - | - | - |
| ME (-) | - | - | - |
| Properties of laminate | | | |
| Heat-sealing temperature at 3 kg load (℃) | 120 | 130 | - |
| Heat-sealing strength (kg/15mm) | 3.9 | 3.4 | - |
| Hot-tack (℃) | 0 | 0 | - |
| Surging | ○ | ○ | × |
| Drawability (m/min.) | 130 | 100 | - |
| Neck-in (mm) | 52 | 18 | 100 |
| Resin pressure ($kg/cm^2$) | 32 | 19 | 42 |

Note:
○ good formation
× bad formation

[II-B] Examples of Resin Compositions for Thin-Gage Forms

In Examples, the following ethylene resins were used as component A.

(1) Ethylene-Vinyl Acetate Copolymer

EVA① : MFR = 0.5 g/10 min; vinyl acetate content = 3 wt%; ME = 2.0; MT = 15 g
EVA② : MFR = 0.5 g/10 min; vinyl acetate content = 14.4 wt%; ME = 1.9; MT = 10 g
EVA③ : MFR =1.5 g/10 min; vinyl acetate content = 8 wt%; ME = 1.9; MT = 9 g

(2) High-pressure Low-density Polyethylene

LDPE① : MFR = 0.8 g/10 min; density = 0.924 g/cm$^3$; ME = 2.0; MT = 14 g; activation energy (Ea) = 10 kJ/mol; Q value = 7
LDPE② : MFR = 3 g/10 min; density = 0.925 g/cm$^3$; ME = 1.8; MT = 4 g; activation energy (Ea) = 9 kJ/mol; Q value = 6

(3) Linear low-density Polyethylene (LLDPE)

LLDPE① : ethylene-1-butene copolymer (1-butene content = 7.5 wt%); MFR = 2 g/10 min; density = 0.920 g/cm$^3$; number of peaks (and peak temperatures) of TREF elution curve = 2 (81°C and 92°C)
LLDPE② : ethylene-1-butene copolymer (1-butene content = 3 wt%); MFR = 2 g/10 min; density = 0.930 g/cm$^3$; number of peaks (and peak temperatures) of TREF elution curve = 2 (82t and 93°C)
LLDPE③ : ethylene-1-hexene copolymer (1-hexene content = 8 wt%); MFR = 2 g/10 min; density = 0.920 g/cm$^3$; number of peaks (and peak temperatures) of TREF elution curve = 2 (82°C and 92°C)

EXAMPLE B-1

Preparation of Ethylene-α -Olefin Copolymer ① (Component B)

A catalyst was prepared using the method described in EP-185918-A. Specifically, 2.0 mmol of complex ethylenebis (4,5,6,7-tetrahydroindenyl)zirconium dichloride was mixed with methyl alumoxane (produced by Toyo Stauffer K.K.) in an amount 1000 times the molar amount of the complex, and the resulting mixture was diluted with toluene to prepare 10 liters of a catalyst solution. Polymerization was performed in the following manner by using the thus prepared catalyst.
To an agitation autoclave type continuous reactor having an inner volume of 1.5 liters was fed a mixture of ethylene and 1-hexene at such a mixing ratio to give a 1-hexene proportion of 80 wt% and allowed to react at 160°C while maintaining the inner pressure at 1000 kg/cm$^2$.
After completion of the reaction, an ethylene-1-hexene copolymer (1-hexene content: 16 wt%) was obtained (hereinafter designated ethylene-α -olefin copolymer① ). The resulting copolymer had an MFR of 3.3 g/10 min, a density of 0.905 g/cm$^3$, and a Q value of 2. The TREF elution curve of ethylene-α -olefin copolymer ① showed a single peak at a peak temperature of 62C. The elution volume at 50°C was 12%.

Preparation of Resin Composition for Thin-Gage Forms

A mixture consisting of 70 wt% of EVA ① as component A and 30 wt% of ethylene-α -olefin copolymer ① as component B was melt-kneaded in a single screw extruder having a diameter of 40 mm at 180C to prepare a resin composition in the form of pellets.

Evaluation

The resulting pellets were formed into a blown film using an inflation forming machine having a diameter of 40 mm, manufactured by Tomy Kikai Kogyo K.K., under the following conditions:

UD: 24
Die diameter: 75 mm
Die lip: 3 mm
Forming temperature: 190°C
Film thickness: 50 μm
Frost line distance: 180 mm
Screw speed: 60 rpm
Blow ratio: 2
Chiller temperature: 15°C

The resulting blown film was evaluated. The results of the evaluation are shown in Table B-1.

EXAMPLE B-2

A resin composition was prepared, formed into a film, and evaluated in the same manner as in Example B-1, except for using EVA ② as component A. The results of the evaluation are shown in Table B-1.

EXAMPLE B-3

A resin composition was prepared, formed into a film, and evaluated in the same manner as in Example B-1, except for changing the mixing ratio of components A and B as shown in Table B-1. The results of the evaluation are shown in Table B-1.

EXAMPLE B-4

A resin composition was prepared, formed into a film, and evaluated in the same manner as in Example B-1, except for using ethylene-α -olefin copolymer ② described below as component B. The results of the evaluation are shown in Table B-1.

Preparation of Ethylene-α -Olefin Copolymer ② (Component B)

A catalyst was prepared using the method described in EP-185918-A. Specifically, 2.0 mmol of complex ethylenebis (4,5,6,7-tetrahydroindenyl)zirconium dichloride was mixed with methyl alumoxane (produced by Toyo Stauffer K.K.) in an amount 1000 times the molar amount of the complex, and the resulting mixture was diluted with toluene to prepare 10 liters of a catalyst solution. Polymerization was performed in the following manner by using the thus prepared catalyst.

To an agitation autoclave type continuous reactor having an inner volume of 1.5 liters was fed a mixture of ethylene and 1-hexene at such a mixing ratio to give a 1-hexene proportion of 80 wt% and allowed to react at 150°C while maintaining the inner pressure at 1200 kg/cm$^2$.

After completion of the reaction, an ethylene-1-hexene copolymer (1 -hexene content: 23 wt%) was obtained (hereinafter designated ethylene-α -olefin copolymer ② ). The resulting copolymer had an MFR of 2.3 g/10 min, a density of 0.891 g/cm$^3$, and a Q value of 2. The TREF elution curve of ethylene-α -olefin copolymer ② showed a single peak at a peak temperature of 43°C. The elution volume at 50°C was 70 wt%.

EXAMPLE B-5

A resin composition was prepared, formed into a film, and evaluated in the same manner as in Example B-1, except for using EVA ③ as component A. The results of the evaluation are shown in Table B-1.

EXAMPLE B-6

A resin composition was prepared, formed into a film, and evaluated in the same manner as in Example B-1, except for using LDPE ① as component A, changing the mixing ratio of components A and B as shown in Table B-1, and changing the film thickness to 30 μm. The results of the evaluation are shown in Table B-1.

EXAMPLE B-7

A resin composition was prepared, formed into a film, and evaluated in the same manner as in Example B-6, except for changing the mixing ratio of components A and B. The results of the evaluation are shown in Table B-1.

EXAMPLE B-8

A resin composition was prepared, formed into a film, and evaluated in the same manner as in Example B-6, except for using LDPE ② as component A. The results of the evaluation are shown in Table B-1.

EXAMPLE B-9

A resin composition was prepared, formed into a film, and evaluated in the same manner as in Example B-6, except for using the same components A and B as used in Example B-8. The results of the evaluation are shown in Table B-1.

EXAMPLE B-10

A resin composition was prepared, formed into a film, and evaluated in the same manner as in Example B-6, except for using ethylene-α -olefin copolymer ③ described below as component B. The results of the evaluation are shown in Table B-1.

222Preparation of Ethylene-α -Olefin Copolymer ③ (Component B)

A catalyst was prepared using the method described in EP-185918-A. Specifically, 2.0 mmol of complex ethylenebis (4,5,6,7-tetrahydroindenyl)zirconium dichloride was mixed with methyl alumoxane (produced by Toyo Stauffer K.K.) in an amount 1000 times the molar amount of the complex, and the resulting mixture was diluted with toluene to prepare 10 liters of a catalyst solution. Polymerization was performed in the following manner by using the thus prepared catalyst.

To an agitation autoclave type continuous reactor having an inner volume of 1.5 liters was fed a mixture of ethylene and 1-hexene at such a mixing ratio to give a 1-hexene proportion of 78 wt% and allowed to react at 165°C while maintaining the inner pressure at 1600 kg/cm$^2$.

After completion of the reaction, an ethylene-1-hexene copolymer (1 -hexene content: 20 wt%) was obtained (hereinafter designated ethylene-α -olefin copolymer ③ ). The resulting copolymer had an MFR of 13 g/10 min, a density of 0.898 g/cm$^3$, and a Q value of 2. The TREF elution curve of ethylene-α -olefin copolymer ③ showed a single peak at a peak temperature of 54°C with substantial elution volume at temperatures other than the peak temperature. The elution volume at 50°C was 48% wt%.

REFERENCE EXAMPLE 1

A resin composition was prepared, formed into a film, and evaluated in the same manner as in Example B-6, except for using LLDPE ① as component A. The results of the evaluation are shown in Table B-1.

REFERENCE EXAMPLE 2

A resin composition was prepared, formed into a film, and evaluated in the same manner as in Example B-6, except for using LLDPE ① as component A and changing the mixing ratio of components A and B. The results of the evaluation are shown in Table B-1.

REFERENCE EXAMPLE 3

A resin composition was prepared, formed into a film, and evaluated in the same manner as in Example B-6, except for using LLDPE ② as component A. The results of the evaluation are shown in Table B-1.

REFERENCE EXAMPLE 4

A resin composition was prepared, formed into a film, and evaluated in the same manner as in Example B-6, except for using LLDPE ③ as component A. The results of the evaluation are shown in Table B-1.

REFERENCE EXAMPLE 5

A resin composition was prepared, formed into a film, and evaluated in the same manner as in Example B-6, except for using LLDPE ① as component A and ethylene-α -olefin copolymer ② as component B. The results of the evaluation are shown in Table B-1.

COMPARATIVE EXAMPLE B-1

A resin composition was prepared, formed into films, and evaluated in the same manner as in Example B-1, except for using EVA ① alone (no component B was used). The results of evaluation are shown in Table B-2.

COMPARATIVE EXAMPLE B-2

A resin composition was prepared, formed into films, and evaluated in the same manner as in Example B-1, except for using EVA ② alone (no component B was used). The results of evaluation are shown in Table B-2.

COMPARATIVE EXAMPLE B-3

A resin composition was prepared, formed into films, and evaluated in the same manner as in Example B-6, except for using LDPE ① alone (no component B was used). The results of evaluation are shown in Table B-2.

COMPARATIVE EXAMPLE B-4

A resin composition was prepared, formed into films, and evaluated in the same manner as in Example B-6, except for using LDPE ② alone (no component B was used). The results of evaluation are shown in Table B-2.

COMPARATIVE EXAMPLE B-5

A resin composition was prepared, formed into films, and evaluated in the same manner as in Example B-6, except for using LLDPE ① alone (no component B was used). The results of evaluation are shown in Table B-2.

COMPARATIVE EXAMPLE B-6

A resin composition was prepared, formed into films, and evaluated in the same manner as in Example B-6, except for using LLDPE ② alone (no component B was used). The results of evaluation are shown in Table B-2.

COMPARATIVE EXAMPLE B-7

A resin composition was prepared, formed into films, and evaluated in the same manner as in Example B-6, except for using LLDPE ③ alone (no component B was used). The results of evaluation are shown in Table B-2.

Table B-1

| | Example No. | | | | |
|---|---|---|---|---|---|
| | B-1 | B-2 | B-3 | B-4 | B-5 |
| Component A | EVA① | EVA② | EVA① | EVA① | EVA③ |
| Component B | | | | | |
| Ethylene-α -olefin copolymer | ① | ① | ① | ② | ① |
| Ratio | | | | | |
| Comp. A : Comp. B | 70:30 | 70:30 | 85:15 | 70:30 | 70:30 |
| Composition | | | | | |
| MFR (g/10 min.) | 1 | 1 | 0.9 | 1 | 2 |
| Properties | | | | | |
| Haze (%) | 9 | 4 | 7 | 9 | 5 |
| LSI (-) | 20 | 6 | 19 | 19 | 12 |
| Heat-sealing temperature at 300g load (℃) | 117 | 100 | 127 | 101 | 109 |
| Heat-sealing strength(g/15mm) | 1400 | 1100 | 1400 | 1400 | 1100 |
| Puncture impact strength (kg·cm/cm) | 1600 | 2500 | 1200 | 1700 | 1900 |
| Thickness (μm) | 50 | 50 | 50 | 50 | 50 |

Table B-1 (continued)

| | Example No. | | | | |
|---|---|---|---|---|---|
| | B-6 | B-7 | B-8 | B-9 | B-10 |
| Component A | | | | | |
| | LDPE① | LDPE① | LDPE② | LDPE② | LDPE① |
| Component B | | | | | |
| Ethylene-α -olefin | | | | | |
| copolymer | ① | ① | ① | ① | ③ |
| Ratio | | | | | |
| Comp. A : Comp. B | 85:15 | 70:30 | 85:15 | 70:30 | 85:15 |
| Composition | | | | | |
| MFR (g/10 min.) | 1 | 1.5 | 3 | 3 | 3 |
| Properties | | | | | |
| Haze (%) | 7 | 9 | 3 | 4 | 3 |
| LSI (-) | 11 | 14 | 6 | 8 | 12 |
| Heat-sealing temperature | | | | | |
| at 300g load (℃) | 124 | 122 | 124 | 121 | 123 |
| Heat-sealing strength (g/15mm) | 1000 | 1000 | 1000 | 1000 | 1000 |
| Puncture impact strength | | | | | |
| (kg·cm/cm) | 1200 | 1200 | 1000 | 1000 | 1000 |
| Thickness (μm) | 30 | 30 | 30 | 30 | 30 |

Table B-1 (continued)

| | Reference Example No. | | | | |
|---|---|---|---|---|---|
| | 1 | 2 | 3 | 4 | 5 |
| Component A | | | | | |
| | LLDPE① | LLDPE① | LLDPE② | LLDPE③ | LLDPE① |
| Component B | | | | | |
| Ethylene-α -olefin copolymer | ① | ① | ① | ① | ② |
| Ratio | | | | | |
| Comp. A : Comp. B | 85:15 | 70:30 | 70:30 | 70:30 | 70:30 |
| Composition | | | | | |
| MFR (g/10 min.) | 2 | 2 | 2 | 2 | 2 |
| Properties | | | | | |
| Haze (%) | 12 | 8 | 11 | 8 | 6 |
| LSI (-) | 2 | 1.5 | 1.5 | 2 | 1 |
| Heat-sealing temperature at 300g load (℃) | 126 | 120 | 133 | 120 | 102 |
| Heat-sealing strength (g/15mm) | 1000 | 1000 | 1000 | 1000 | 1000 |
| Puncture impact strength (kg·cm/cm) | 1000 | 1300 | 1000 | 1400 | 1700 |
| Thickness (μm) | 30 | 30 | 30 | 30 | 30 |

Table B-2

| | Comparative Example No. | | | | | | |
|---|---|---|---|---|---|---|---|
| | B-1 | B-2 | B-3 | B-4 | B-5 | B-6 | B-7 |
| Component A | EVA① | EVA② | LDPE① | LDPE② | LLDPE① | LLDPE② | LLDPE③ |
| Component B | | | | | | | |
| Ethylene-α -olefin copolymer | - | - | - | - | - | - | - |
| Ratio | | | | | | | |
| Comp. A : Comp. B | 100:0 | 100:0 | 100:0 | 100:0 | 100:0 | 100:0 | 100:0 |
| Composition | | | | | | | |
| MFR (g/10 min.) | - | - | - | - | - | - | - |
| Properties | | | | | | | |
| Haze (%) | 14 | 8 | 10 | 5 | 17 | 21 | 20 |
| LSI (-) | 32 | 7 | 14 | 10 | 3 | 4 | 5 |
| Heat-sealing strength at 300g load (℃) | 131 | 100 | 133 | 128 | 138 | 145 | 140 |
| Heat-sealing strength (g/15mm) | 1300 | 1100 | 900 | 900 | 800 | 900 | 1000 |
| Puncture impact strength (kg·cm/cm) | 1200 | 2400 | 900 | 800 | 960 | 1000 | 1000 |
| Thickness (μm) | 50 | 50 | 30 | 30 | 30 | 30 | 30 |

## Claims

1. A resin composition comprising:

(A) 60 to 85% by weight of an ethylene-vinyl acetate copolymer having the following properties (a') to (d'):

(a') a melt flow rate of 1 to 50 g/10 min;
(b') a vinyl acetate content of 3 to 30% by weight;
(c') a memory effect of 1.1 to 2.0; and
(d') a melt tension of not less than 1 g; and

(B) 15 to 40% by weight of a copolymer of ethylene and an α-olefin having 6 to 10 carbon atoms, said component (B) having the following properties (a), (b), (c) and (d-1):

(a) a density (D) of 0.86 to 0.935 g/cm$^3$;
(b) a melt flow rate (MFR) of 1 to 50 g/10min;
(c) an elution curve showing a single peak at a peak temperature of not higher than 100°C, said elution curve being obtained by temperature rising elution fractionation (TREF), in which substantial elution may occur at temperatures other than said peak temperature; and
(d-1) an integral elution volume of not less than 90% at an elution temperature of 90°C in TREF.

2. A resin composition comprising:

(A) 60 to 85% by weight of a high-pressure low-density polyethylene having the following properties (a') to (d') :

(a') a melt flow rate of 1 to 50 g/10 min;
(b') a density of 0.915 to 0.93 g/cm$^3$ ;
(c') a memory effect of 1.3 to 2.2; and
(d') a melt tension of not less than 1 g; and

(B) 15 to 40% by weight of a copolymer of ethylene and an α-olefin having 6 to 10 carbon atoms, said component (B) having the following properties (a), (b), (c) and (d-1) :

(a) a density (D) of 0.86 to 0.935 g/cm$^3$;
(b) a melt flow rate (MFR) of 1 to 50 g/10min;
(c) an elution curve showing a single peak at a peak temperature of not higher than 100°C, said elution curve being obtained by temperature rising elution fractionation (TREF), in which substantial elution may occur at temperatures other than said peak temperature; and
(d-1)an integral elution volume of not less than 90% at an elution temperature of 90°C in TREF.

3. A resin composition which comprises:

(A) 60% to 85% of an ethylene-vinyl acetate copolymer having the following properties (a') to (d'):

(a') a melt flow rate of 0.01 to 30 g/10 min;
(b') a vinyl acetate content of 3 to 15% by weight;
(c') a memory effect of 1.1 to 2.0; and
(d') a melt tension of not less than 2.5 g, and

(B) 15% to 40% by weight of a copolymer of ethylene and an α-olefin having 6 to 10 carbon atoms, said component (B) having the following properties (a), (b), (c) and (d-2):

(a) a density (D) of 0.86 to 0.935 g/cm$^3$;
(b) a melt flow rate (MFR) of 1 to 50 g/10min;
(c) an elution curve showing a single peak at a peak temperature of not higher than 100°C, said elution curve being obtained by temperature rising elution fractionation (TREF), in which substantial elution may occur at temperatures other than said peak temperature; and
(d-2) an elution volume Y, in percent by weight based on the total weight of component B, at 50°C in TREF satisfying the following condition (1) or (2) :

(1) Y ≦ 10 when the density of component B is not less than 0.91 g/$cm^3$ or;
(2) Y ≦ -4500D + 4105 when the density D of component B is less than 0.91 g/$cm^3$; provided that Y ≦ 100.

**4.** A resin composition which comprises:

(A) 60 to 85% by weight a high-pressure low-density polyethylene having the following properties (a') to (d') :

(a') a melt flow rate of 0.01 to 30 g/10 min;
(b') a density of 0.915 to 0.93 g/$cm^3$ ;
(c') a memory effect of 1.3 to 2.2; and
(d') a melt tension of not less than 1 g, and

(B) 15 to 40% by weight of a copolymer of ethylene and an α-olefin having 6 to 10 carbon atoms, said component (B) having the following properties (a), (b), (c) and (d-2) :

(a) a density (D) of 0.86 to 0.935 g/$cm^3$;
(b) a melt flow rate (MFR) of 1 to 50 g/10min;
(c) an elution curve showing a single peak at a peak temperature of not higher than 100°C, said elution curve being obtained by temperature rising elution fractionation (TREF), in which substantial elution may occur at temperatures other than said peak temperature; and
(d-2) an elution volume Y, in percent by weight based on the total weight of component B, at 50°C in TREF satisfying the following condition (1) or (2) :

(1) Y ≦ 10 when the density of component B is not less than 0.91 g/$cm^3$; or
(2) Y ≦ -4500D + 4105 when the density D of component B is less than 0.91 g/$cm^3$; provided that Y ≦ 100.

**5.** The use of a resin composition according to claim 1 or 2 in laminates.

**6.** The use of a resin composition according to claims 3 or 4 in thin-gage forms selected from films and sheets.

**Patentansprüche**

**1.** Harzzusammensetzung, umfassend:

(A) 60 bis 85 Gew.-% eines Ethylen-Vinylacetat-Copolymers mit den folgenden Eigenschaften (a') bis (d'):

(a') eine Schmelzflußrate von 1 bis 50 g/10 min;

(b') ein Vinylacetat-Gehalt von 3 bis 30 Gew.-%;

(c') ein Memory-Effekt von 1,1 bis 2,0; und

(d') eine Schmelzspannung von nicht weniger als 1 g;

und

(B) 15 bis 40 Gew.-% eines Copolymers aus Ethylen und einem α-Olefin mit 6 bis 10 Kohlenstoffatomen, wobei Komponente (B) die folgenden Eigenschaften (a), (b), (c) und (d-1) aufweist:

(a) eine Dichte (D) von 0,86 bis 0,935 g/$cm^3$;

(b) eine Schmelzflußrate (MFR) von 1 bis 50 g/10 min;

(c) eine Elutionskurve, die einen einzelnen Peak bei einer Peaktemperatur von nicht mehr als 100°C zeigt, wobei man diese Elutionskurve durch eine Temperaturanstiegs-Elutionsfraktionierung (TREF) erhält, in der eine wesentliche Elution bei von der Peaktemperatur verschiedenen Temperaturen auftreten kann; und

(d-1) ein Integralelutionsvolumen von nicht weniger als 90 % bei einer Elutionstemperatur von 90°C in der TREF.

**2.** Harzzusammensetzung, umfassend:

(A) 60 bis 85 Gew.-% eines Hochdruck-Polyethylens geringer Dichte mit den folgenden Eigenschaften (a') bis (d') :

(a') eine Schmelzflußrate von 1 bis 50 g/10 min;

(b') eine Dichte von 0,915 bis 0,93 g/cm$^3$;

(c') ein Memory-Effekt von 1,3 bis 2,2; und

(d') eine Schmelzspannung von nicht weniger als 1 g;

und

(B) 15 bis 40 Gew.-% eines Copolymers aus Ethylen und einem $\alpha$-Olefin mit 6 bis 10 Kohlenstoffatomen, wobei die Komponente (B) die folgenden Eigenschaften (a), (b), (c) und (d-1) aufweist:

(a) eine Dichte (D) von 0,86 bis 0,935 g/cm$^3$;

(b) eine Schmelzflußrate (MFR) von 1 bis 50 g/10 min;

(c) eine Elutionskurve, die einen einzelnen Peak bei einer Peaktemperatur von nicht mehr als 100°C zeigt, wobei man diese Elutionskurve durch eine Temperaturanstiegs-Elutionsfraktionierung (TREF) erhält, in der eine wesentliche Elution bei von der Peaktemperatur verschiedenen Temperaturen auftreten kann; und

(d-1) ein Integralelutionsvolumen von nicht weniger als 90 % bei einer Elutionstemperatur von 90°C in der TREF.

**3.** Harzzusammensetzung, umfassend:

(A) 60 bis 85 Gew.-% eines Ethylen-Vinylacetat-Copolymers mit den folgenden Eigenschaften (a') bis (d') :

(a') eine Schmelzflußrate von 0,01 bis 30 g/10 min;

(b') ein Vinylacetat-Gehalt von 3 bis 15 Gew.-%;

(c') ein Memory-Effekt von 1,1 bis 2,0; und

(d') eine Schmelzspannung von nicht weniger als 2,5 g;

und

(B) 15 bis 40 Gew.-% eines Copolymers aus Ethylen und einem $\alpha$-Olefin mit 6 bis 10 Kohlenstoffatomen, wobei die Komponente (B) die folgenden Eigenschaften (a), (b), (c) und (d-2) aufweist:

(a) eine Dichte von 0,86 bis 0,935 g/cm$^3$;

(b) eine Schmelzflußrate (MFR) von 1 bis 50 g/10 min;

(c) eine Elutionskurve, die einen einzelnen Peak bei einer Peaktemperatur von nicht mehr als 100°C zeigt, wobei man diese Elutionskurve durch eine Temperaturanstiegs-Elutionsfraktionierung (TREF) erhält, in der eine wesentliche Elution bei von der Peaktemperatur verschiedenen Temperaturen auftreten kann; und

(d-2) ein Elutionvolumen Y, in Gew.-% bezogen auf das Gesamtgewicht der Komponente B, bei 50°C in der TREF, das die folgende Bedingung (1) oder (2) erfüllt:

(1) Y ≦ 10, wenn die Dichte der Komponente B nicht weniger als 0,91 g/$cm^3$ ist; oder

(2) Y ≦ -4500D + 4105, wenn die Dichte D der Komponente B weniger als 0,91 g/$cm^3$ ist, vorausgesetzt, daß Y ≦ 100.

**4.** Harzzusammensetzung, umfassend:

(A) 60 bis 85 Gew.-% eines Hochdruck-Polyethylens geringer Dichte mit den folgenden Eigenschaften (a') bis (d') :

(a') eine Schmelzflußrate von 0,01 bis 30 g/10 min;

(b') eine Dichte von 0,915 bis 0,93 g/$cm^3$;

(c') ein Memory-Effekt von 1,3 bis 2,2; und

(d') eine Schmelzspannung von nicht weniger als 1 g;

und

(B) 15 bis 40 Gew.-% eines Copolymers aus Ethylen und einem α-Olefin mit 6 bis 10 Kohlenstoffatomen, wobei die Komponente (B) die folgenden Eigenschaften (a), (b), (c) und (d-2) aufweist:

(a) eine Dichte (D) von 0,86 bis 0,935 g/$cm^3$;

(b) eine Schmelzflußrate (MFR) von 1 bis 50 g/10 min;

(c) eine Elutionskurve, die einen einzelnen Peak bei einer Peaktemperatur von nicht mehr als 100°C zeigt, wobei man diese Elutionskurve durch eine Temperaturanstiegs-Elutionsfraktionierung (TREF) erhält, in der eine wesentliche Elution bei von der Peaktemperatur verschiedenen Temperaturen auftreten kann; und

(d-2) ein Elutionvolumen Y, in Gew.-% bezogen auf das Gesamtgewicht der Komponente B, bei 50°C in der TREF, das die folgende Bedingung (1) oder (2) erfüllt:

(1) Y ≦ 10, wenn die Dichte der Komponente B nicht weniger als 0,91 g/$cm^3$ ist; oder

(2) Y ≦ -4500D + 4105, wenn die Dichte D der Komponente B weniger als 0,91 g/$cm^3$ ist, vorausgesetzt, daß Y ≦ 100.

**5.** Verwendung einer Harzzusammensetzung gemäß Anspruch 1 oder 2 in Laminaten.

**6.** Verwendung einer Harzzusammensetzung gemäß Anspruch 3 oder 4 in Feinstformen ausgewählt aus Feinfolien und Folien.

## Revendications

**1.** Composition de résine comprenant :

(A) 60 à 85% en poids d'un copolymère d'éthylène-acétate de vinyle ayant les propriétés (a') à (d') suivantes :

(a') un taux d'écoulement fondu de 1 à 50 g/10 mn ;
(b') une teneur en acétate de vinyle de 3 à 30% en poids ;
(c') un effet mémoire de 1,1 à 2,0 ; et
(d') une tension fondue non inférieure à 1 g ; et

(B) 15 à 40% en poids d'un copolymère d'éthylène et d'une α-cléfine ayant 6 à 10 atomes de carbone, ledit composant (B) ayant les propriétés (a), (b), (c), et (d-1) suivantes :

(a) une densité (D) de 0,86 à 0,935 g/$cm^3$ ;
(b) un taux d'écoulement fondu (MFR) de 1 à 50 g/10 mn ;
(c) une courbe d'élution montrant un pic unique à une température de pic non supérieure à 100°C, ladite courbe d'élution étant obtenue par fractionnement d'élution en augmentant la température (TREF), dans laquelle une élution, substantielle peut se produire à des températures différentes de ladite température de pic ; et
(d-1) un volume d'élution intégral non inférieur à 90% à une température d'élution de 90°C dans la TREF

**2.** Composition ce résine comprenant :

(A) 60 à 85% en poids d'un polyéthylène basse densité haute pression ayant les propriétés (a') et (d') qui suivent :

(a') un taux d'écoulement fondu de 1 à 50 g/10 mn ;
(b') une densité de 0,915 à 0,93 g/$cm^3$ ;
(c') un effet mémoire de 1,3 à 2,2 ; et
(d') une tension fondue non inférieure à 1 g ; et

(B) 15 à 40% en poids d'un copolymère d'éthylène et d'une α-oléfine ayant 6 à 10 atomes de carbone, ledit composant (B) ayant les propriétés (a), (b), (c), et (d-1) suivantes :

(a) une desnité (D) de 0,86 à 0,935 g/$cm^3$ ;
(b) un taux d'écoulement fondu (MFR) de 1 à 50 g/10 mn ;
(c) courbe d'élution montrant un pic unique à une température de pic non supérieure à 100°C, ladite courbe d'élution étant obtenue par fractionnement d'élution en augmentant la température (TREF), dans laquelle une élution substantielle peut se produire à des températures différentes de ladite température de pic ; et
(d-1) un volume d'élution intégral non inférieur à 90°C à une température d'élution dans la TREF.

**3.** Composition de résine qui comprend :

(A) 60 à 85% d'un copolymère d'éthylène-acétate de vinyle ayant des propriétés (a') à (d') suivantes :

(a') un taux d'écoulement fondu de 0,01 à 30g/10 mn ;
(b') une teneur en acétate de vinyle de 3 à 15% en poids ;
(c') un effet mémoire de 1,1 à 2,0 ; et
(d') une tension fondue non inférieure à 2,5 g, et

(B) 15% à 40% en poids d'un copolymère d'éthylène et d'une α-oléfine ayant 6 à 10 atomes de carbone, ledit composant (B) ayant les propriétés (a), (b), (c), et (d-2) suivantes :

(a) une densité (D) de 0,86 à 0,935 g/$cm^3$ ;
(b) un taux d'écoulement fondu (MFR) de 1 à 50 g/10 mn ;
(c) une courbe d'élution montrant un pic unique à une température de pic non supérieure à 100°C, ladite courbe d'élution étant obtenue par fractionnement d'élution en augmentant la température (TREF), dans laquelle une élution substantielle peut se produire à des températures différentes de ladite température de pic ; et
(d-2) un volume d'élution Y, en pourcent en poids sur la base du poids total du composant B, à 50°C dans la TREF satisfaisant la condition (1) ou (2) suivante :

(1) $Y \leq 10$ lorsque la densité D du composant B n'est pas inférieure à 0,91 g/cm$^3$; ou
(2) $Y \leq -4500D + 4105$ lorsque la densité D du composant B est inférieure à 0,91 g/cm$^3$, à condition que $Y \leq 100$

**4.** Composition de résine qui comprend :

(A) 60 à 85% d'un polyéthylène basse densité haute pression ayant les propriétés (a') à (d') suivantes :

(a') un taux d'écoulement fondu de 0,01 à 30 g/10 mn ;
(b') une densité de 0,915 à 0,93 g/cm$^3$ ;
(c') un effet mémoire de 1,3 à 2,2 ; et
(d') une tension fondue non inférieure à 1 g ; et

(B) 15 à 40% en poids d'un copolymère d'éthylène et d'une $\alpha$-oléfine ayant 6 à 10 atomes de carbone, ledit composant (B) ayant les propriétés (a), (b), (c), et (d-2) suivantes :

(a) une densité (D) de 0,86 à 0,935 g/cm$^3$ ;
(b) un taux d'écoulement fondu (MFR) de 1 à 50 g/10 mn ;
(c) une courbe d'élution montrant un pic unique à une température de pic non supérieure à 100°C, ladite courbe d'élution étant obtenue par fractionnement d'élution en augmentant la température (TREF), dans laquelle une élution substantielle peut se produire à des températures différentes de ladite température de pic ; et
(d-2) un volume d'élution Y, en pourcent en poids sur la base du poids total du composant B, à 50°C dans la TREF satisfaisant la condition (1) ou (2) suivante :

(1) $Y \leq 10$ lorsque la densité D du composant B n'est pas inférieure à 0,91 g/cm$^3$; ou
(2) $Y \leq -4500D + 4105$ lorsque la densité D du composant B est inférieure à 0,91 g/cm$^3$, à condition que $Y \leq 100$.

**5.** Utilisation d'une composition de résine selon la revendication 1 ou 2 dans des laminés.

**6.** Utilisation de la composition de résine selon les revendications 3 à 4 dans des formes de fine épaisseur sélectionnées parmi des films et des feuilles.